# EUROPEAN PATENT APPLICATION

(11) **EP 2 463 065 A1**
(43) Date of publication of application: **13.06.2012**
(21) Application number: 10193907.2
(22) Date of filing: 07.12.2010
(51) Int. Cl.: B25J 15/00, B25J 15/06, B25J 17/02

(54) **Vacuum gripping head for an industrial robot**

(71) Applicant: CAMA 1 SpA, 20124 Milano (IT)
(72) Inventor: Bellante, Daniele, 23846 Garbagnate Monastero (LC) (IT)
(74) Representative: Zardi, Marco

(57) **Abstract**

A gripping head (1) for a handling robot, comprising: a body (2); at least one gripping member (3); wherein a part (10) of the gripping member slides inside a respective chamber (9) of said body, and said gripping member ends with a product gripping section (21); wherein said gripping member has an axial passing through channel (20), open at both ends and communicating with at least one air/vacuum connection (8), and wherein: the coupling between the sliding gripping member (3) and the lateral wall (15) or the lateral walls of said chamber is free and not airtight, and said gripping member comprises a seal suction pad (16) inside the chamber (9) which is set up to provide an air seal which substantially separates said chamber (9) from said air/vacuum channel (20).

## Description

### Field of the invention

The invention relates to a vacuum operated gripping head for an industrial robot. The invention relates moreover to an industrial robot equipped with said gripping head, preferably a robot according to the delta concept. A preferred application of the invention is in the field of packaging machines.

### Prior art

The gripping head of an industrial robot is commonly understood as the termination member of the robot. The head is moved in space by the kinematic system of the robot, and comprises at least one gripping member which allows articles of various kinds to be picked up and transferred in space.

A head provided with a plurality of gripping members is known as multiple head. A multiple head is capable of grasping and transferring in space a plurality of articles for each work cycle. The gripping members can be arranged in several parallel rows, with only one or several gripping members destined for each product unit, according to the type of the product, and according to various configurations which are in themselves known.

The gripping members or member operate by vacuum, being connected to a vacuum source. Said vacuum source is normally outside the head. The term "vacuum" is also used to indicate in general a pressure lower than the outside pressure of the environment wherein the head operates, which is normally atmospheric pressure.

Vacuum gripping heads, of the single grip or multiple grip type, are commonly used in robots for packaging, for example for loading articles inside a box or container. Gripping by vacuum in particular is suitable for manipulating products which do not support mechanical gripping due to their shape and/or due to their physical characteristics and is very fast and, for this reason, is popular in packaging machines, which need to operate at increasingly higher speeds.

The head is normally associated to a robot. For example a parallel robot according to the delta concept, known from US-A-4976582, comprises a wrist which is moved in space by hinged rods and is preferably also rotating. A gripping head is attached to said wrist and allows the robot to grasp, orientate and transfer articles inside its working space.

The gripping member of a head of the type considered here is substantially sliding with a piston movement in a respective housing seat. It ends with a gripping device, suitable for direct contact with the product, which for example is represented by a suction pad. The gripping member slides between two stroke end positions: a first rest position with no product, which corresponds to the maximum extension, i.e. maximum departure of the gripping suction pad relative to the body of the head, and a second stroke end position with gripped product, wherein the suction pad moves towards the body.

In a known embodiment the gripping member comprises essentially a metal cup slidingly inserted in a respective sleeve which is formed in the plastic body of the multiple head, and carries the product gripping suction pad. The assembly represented by cup and suction pad has an axial air passage, or passing-through channel, which communicates with a vacuum inlet and allows the suction pad the desired effect of gripping by vacuum.

For a better understanding of the technical problem of the invention, reference will be made mainly to said embodiment with cup and suction pad, purely by way of a non-limiting example.

The principle of functioning, in brief, is the following. The contact with the product closes the end aperture of the gripping suction pad, with the result that a vacuum is formed in the passing-through channel of the cup-suction pad assembly and the assembly withdraws by sliding in the sleeve until it reaches the abovementioned second stroke end position (product grip). For the release of the product, the vacuum supply is interrupted or replaced with supply of compressed air, which returns the cup and the gripping suction pad into the first stroke end position (rest and no product). A spring or another elastic return member can also be provided for this purpose.

The sliding coupling between suction pad-carrying cup and sleeve, or more generally between a sliding assembly of the gripping member and the respective sliding and guide seat, poses some technical problems. In fact it is desirable for the cup to slide in the sleeve with the minimum friction possible, in order to be able to withstand the high working speeds these devices are normally subjected to, for example the working speeds of a delta robot. It is moreover desirable to have a seal as hermetic as possible between cup and sleeve in order to reduce the consumption of the pneumatic system necessary for maintaining the vacuum in the passing through channel and, therefore, the grip. Consumption of energy of the pneumatic system is also referred to as "air consumption" in the field. It is understood that a high air consumption also implies oversizing of the vacuum pump, with drawbacks of costs, noise and a potential source of reliability problems.

These needs have not yet found a satisfactory compromise in the prior art. The known options include a sliding seal between the mobile part and a lateral surface of the guide and housing chamber, i.e. in the example between cup and sleeve, yet with the disadvantages of more costly manufacture, need for thorough quality control and greater working friction; or adopting a less precise and non-airtight coupling which gives fewer constructional and economic problems but inevitably increases the air consumption and the workload of the pneumatic system in order to maintain the vacuum. The saving in construction, in this second case, is overcome by the greater consumption of air during operation.

Summing up, in the prior art the gripping member comprises a sliding "piston" assembly in a chamber and said assembly comprises a passing through channel for the air or the vacuum which at one end communicates with a source of the vacuum, and at the other end terminates with the product gripping section, typically the aperture of a suction pad. Maintaining the vacuum of said channel, in order to ensure gripping, creates conflicting needs and poses technical problems which have not yet been solved in a satisfactory manner.

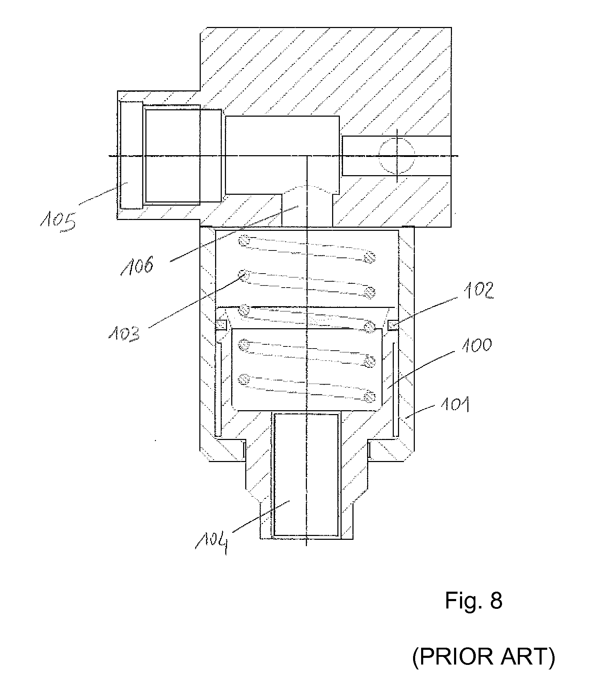

A detail of a gripping member according to the prior art is shown in the section of Fig. 8. The sliding coupling between the cup 100 and the lateral wall of the sleeve 101 is substantially airtight thanks to a gasket 102 inserted in a seat of the head of the cup and rubbing against the wall of the sleeve. The rise of the cup in the sleeve is opposed by a return spring 103. A passing through channel 104 of the cup communicates with a respective vacuum inlet 105 and passage 106 of air/vacuum supply. The presence of the gasket 102 causes the disadvantages mentioned above.

### Summary of the invention

The object of the present invention is to overcome these limits of the prior art. The basic idea of the invention is to provide the sliding gripping member with an appropriate seal member which isolates said passing through channel from said chamber. The seal member according to the invention operates both in rest position without product and during the movement of the gripping member until the stroke end position with gripped product.

One aspect of the invention is a gripping head according to the annexed claim 1, comprising:
- a body;
- at least one gripping member;
- wherein said at least one gripping member comprises an axially piston-like sliding part inside a respective chamber of said body, and said gripping member ends with a product gripping section;
- wherein said at least one gripping member has at least one respective axial passing through channel, open at both ends and communicating with at least one air/vacuum connection of said body,
   the gripping head being characterised in that:
- the coupling between the part of gripping member sliding in the chamber and the lateral wall or the lateral walls of said chamber is free and not airtight, and
- the gripping head comprises at least one seal member, positioned inside said chamber and arranged so as to create an airtight seal between said gripping member and an internal surface of said body, creating an airtight seal which substantially separates said chamber from said passing through channel of the gripping member.

In a preferred embodiment said seal member is associated with the sliding gripping member. The seal member preferably comprises a continuous edge which is in contact with a surface of the body, around an aperture which places in communication said air/vacuum connection and the passing through channel of the gripping member. Thanks to said position of the edge of the seal member, the desired tightness and the desired effect of isolating the passing through channel from said chamber are obtained. The aforementioned surface of the body whereon the seal of the seal member is effected is preferably flat and more preferably positioned on a plane perpendicular to the axis of sliding of the gripping member. Said surface preferably forms the ceiling of said chamber.

The term of air/vacuum connection refers to a per se known connection suitable for the connection to an external pneumatic system, which can be used to supply air or to aspirate air, i.e. operating as a source of vacuum.

In a preferred embodiment the gripping member comprises a cup which is inserted slidingly in a respective chamber. Said chamber is preferably defined by a sleeve portion of the body.

According to further preferred aspects, the cup supports directly, or via a nipple or other connection means, a gripping device terminating with said product gripping section. Said gripping device is advantageously represented by a suction pad.

The invention reaches the above stated purpose by providing a substantially hermetic sealing means which isolates the passing through channel of the gripping member which supplies the vacuum at the gripping section. This sealing means facilitates the retaining of the gripped product while the head completes the required work cycle. The sealing means does not increase friction and does not hinder the sliding of the gripping member in the respective chamber, since it does not work through contact with the lateral wall of the chamber. The invention avoids the need to create a rubbing seal, such as for example a gasket, in contact with the internal lateral wall of the chamber, or the need to use an accurate assembly in order to seek to reduce air leaks, but with the consequent additional costs. An air gap can quite easily be left between cup and internal wall of the chamber, without adopting precise tolerances. This is even more advantageous if the body is made in a plastic material for which narrow dimensional tolerances are not possible. The invention substantially isolates a route from the air/vacuum connection to the product gripping section, rather than attempting to make a seal between parts in reciprocal rubbing motion.

It has to be noted that different embodiments of the invention may comprise one single seal member or a plurality of seal members, positioned to create the hermetic seal mentioned above.

In a preferred embodiment the cup is sliding in an axial direction in a substantially cylindrical chamber. In other embodiments the chamber may however have a different shape, for example prismatic. A preferred use of the invention is in combination with an industrial robot, in particular a loading robot in a packaging machine. Advantageously a head according to the invention is applied to a robot according to the delta concept. This indication is not however limiting.

The invention is applicable either to a single gripping head or to a multiple gripping head. In a multiple gripping head each gripping member slides with non-airtight coupling with the walls of the respective chamber, and comprises the described seal member.

According to another aspect of the invention, said seal member comprises at least one elastically deformable portion, which can act as elastic member to facilitate the return of the sliding assembly into the rest position.

In a particularly preferred embodiment, said seal member is formed as a suction pad comprising at least one bellows portion, which compresses like a spring and supplies a certain elastic return action, towards the rest position, of the gripping member.

In some embodiments of the invention, the elastic seal member represents the only elastic member associated with the gripping member and replaces a conventional return spring. Said feature represents a further advantage of the invention, as in the prior art a return spring is always adopted, usually a metal spring, with some drawbacks such as increase in weight and risk of fatigue failure.

An advantage of the invention is also the fact that it allows to maintain more easily a differential of height between the rest positions without product and the stroke end position with product gripped. The related advantage is that the gripping member, or gripping members in the case of multiple head, is more tolerant to differences in size between the single product units. These differences may be due to variability of the dimensions of the product, or to the fact that the same gripping member has to handle products which are not strictly identical. The latter need may arise, for example, in the sector of food packaging, in order to create assortments of products within a same tray or packaging.

The advantages of the invention will be even more evident with the aid of the following description, referred to a preferred embodiment.

### Brief description of the drawings

Fig. 1 is an axonometric view of a multiple gripping head according to an embodiment of the invention.
Fig. 2 is a front view of the head of Fig. 1.
Fig. 3 shows the head of Figs. 1 and 2, with a product gripped.
Fig. 4 is a section of the gripping head of Figs. 1-3, along the plane indicated as IV-IV in Fig. 2.
Fig. 5 is a detail of Fig. 4 with gripping member in rest position and no product.
Fig. 6 is similar to Fig. 5, yet shows the gripping member in stroke end position with product gripped.
Fig. 7 shows an industrial robot, in this case a delta robot, equipped with a gripping head according to the invention.

### Detailed description of a preferred embodiment

A gripping head for a manipulator robot is denoted overall by 1. Said head 1 comprises a body 2, preferably in plastic material; in the example the head 1 is a multiple head and comprises a plurality of gripping members 3, which are positioned in two rows of four and extend from the lower part of the head 1.

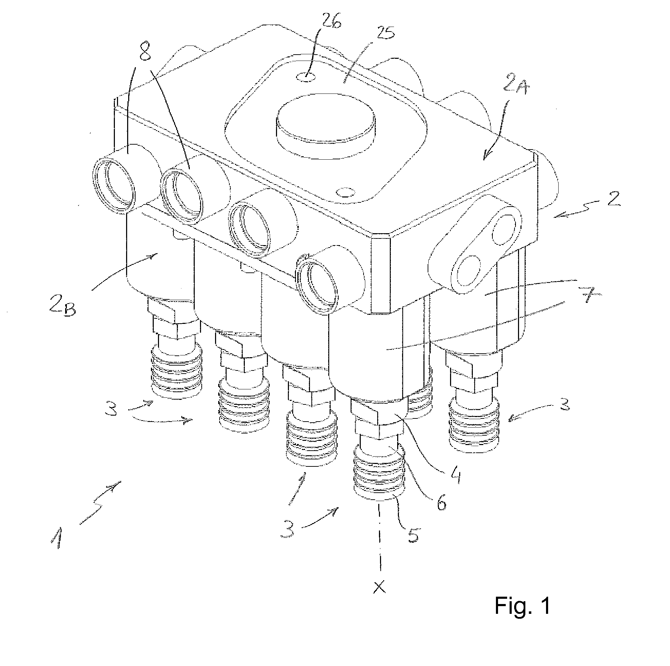

The gripping members 3 are axially sliding, along respective axes parallel to the x axis which is shown in Fig. 1, and are actuated by vacuum, in the manner which will be illustrated in greater detail herein below. For this purpose the body 2 of the head is provided with connections 8 to a pneumatic system or vacuum system; preferably the body 2 is provided with a respective connection 8 for each of the gripping members 3.

In greater detail, the body 2 comprises: an upper portion 2_{A} equipped with the pneumatic connections 8 and necessary internal channels, and provided for the mechanical connection to a mobile member of a robot such as for example the wrist of a delta robot; a portion or several lower portions 2_{B} which form a series of sleeves 7, substantially cylindrical, each one housing a gripping member 3. More particularly, a sleeve 7 defines a housing chamber and a sliding seat for a respective gripping member 3. Note that the described construction of the body 2 is an example and not essential for the invention.

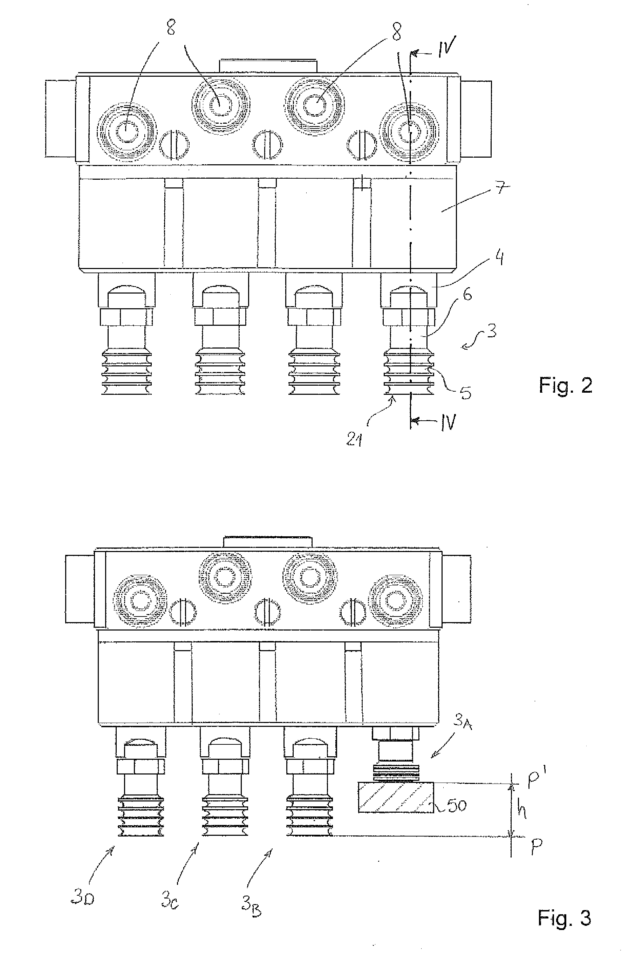

A gripping member 3 extends from the body 2 and ends advantageously with a product gripping device, here a suction pad 5 by way of an example, functioning by vacuum. The vacuum is induced by a vacuum source appropriately connected to the respective connection 8. More particularly the suction pad 5 ends with an open section 21 (Fig. 2) where, in use, a vacuum is created which allows the head to lift a product. The pneumatic connections are not illustrated since they can be made with a technique in itself known and are not essential to the invention.

In a preferred embodiment (Figs. 1-3), a gripping member 3 comprises a cup 4, preferably in metal, which is sliding in the respective sleeve 7. The cup 4 carries the abovementioned end suction pad 5, advantageously by means of a joining nipple 6. The gripping member 3, and in particular the assembly formed by cup 4, nipple 6 and suction pad 5, is sliding inside the sleeve 7 between a first stroke end position without product, also known as rest position, and a second stroke end position with product gripped. These stroke end positions are illustrated in Fig. 3, wherein the pair of gripping members 3_{A} is shown in the position of gripping of a product 50, and the remaining pairs 3_{B}, 3_{C} and 3_{D} are shown in the rest position without product.

The product 50 can be for example a food product, a product already packaged in a flowpack, and so on, these indications being given purely by way of a non-limiting example of the possible applications.

The drawing shows the product gripping plane P which corresponds to the plane where the gripping sections of the suction pads 5 are positioned at rest and without product. The plane P' is also indicated, corresponding to the height of the gripping sections of the suction pads 5 in product-gripping condition (member 3_{A}). The distance h between planes P and P' defined in this way is such as to avoid the interference of a product already gripped with the subsequent gripping operations. In other words, the translation of the member 3_{A} by the height h maintains the overall dimensions of the product 50 already gripped outside of the working space of the adjacent members 3_{B} and so on.

Consideration of Fig. 3 gives a better understanding of the importance of maintaining correct vacuum in the gripping section 21 of the suction pads 5, in order to hold the product and to ensure that a member 3 during gripping remains stable in the stroke end position defined by the plane P'. It is also understood that the height h allows the gripping head 1 to manage also a dimensional difference between the products, due to normal tolerances or to the handling of an assortment of different products.

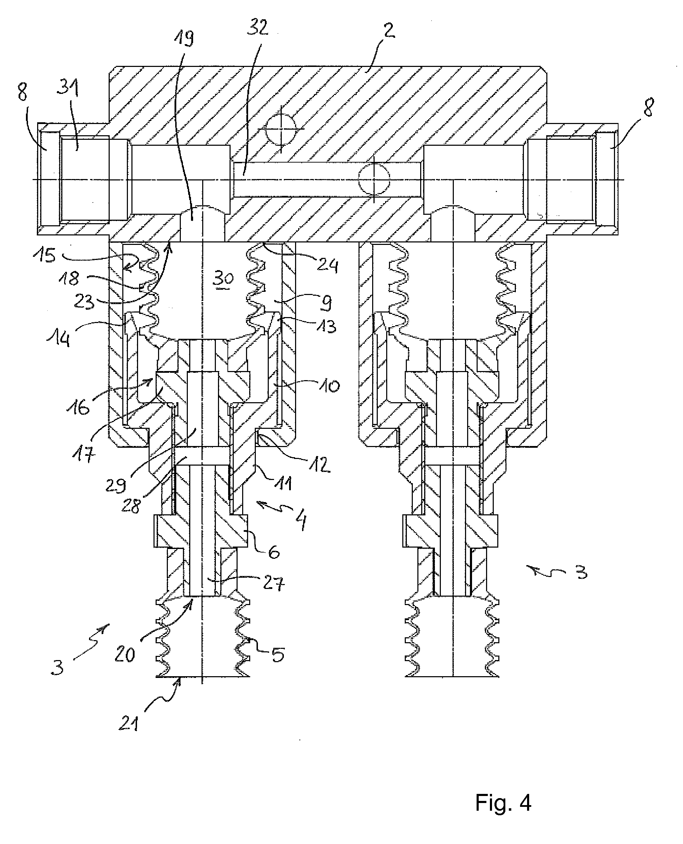

The gripping members 3 are now described in greater detail, with reference to Figs. 4 to 6 which show a preferred embodiment thereof.

The cup 4 is slidingly associated with a chamber 9 of the sleeve 7, which in the example is substantially cylindrical but other shapes, e.g. prismatic, are possible. The cup 4 comprises in greater detail a head part 10 which slides inside the chamber 9 of the sleeve 7, and a stem 11 which remains at least partially outside the sleeve 7, passing through a hole 12 of the sleeve itself. Said stem 11 carries the nipple 6 whereon the suction pad 5 is mounted.

The suction pad 5 is preferably shaped with a cylindrical part fitted on the nipple 6 and a deformable bellows part for product gripping, as seen in Figs. 1-4.

The sliding of the cup 4 is guided substantially by a head ring 13, which has a diameter close to, but in any case smaller than, the internal diameter of the sleeve 7, leaving an air gap which is denoted by 14. The sliding coupling between the cup 4 and the lateral wall 15 of the chamber 9 is free and is not airtight in any point. Similarly the nominal diameter of the hole 12 is slightly greater than the diameter of the stem 11, so that there is an air passage around the stem 11.

A seal suction pad 16 is associated with the cup 4, in particular said suction pad 16 is mounted in a cavity of the head 10. In the example, said suction pad 16 has essentially a hollow body 17 and a deformable bellows part 18. The body 17 is advantageously made of plastic or metal and is screwed in a threaded hole 28 of the stem 11; said bellows part 18 is made of a deformable material and is formed as an undulated cylindrical wall. It is understood that the bellows part 18 constitutes the upper part of an assembly sliding in the sleeve 7 and forming the gripping member 3.

The cup 4 and the nipple 6 have an axial hole, like the body 17 of the suction pad 16, with obtaining of an axial passing-through channel in the member 3. Said channel is generally denoted by 20 and places in communication the air/vacuum connection 8 with the open gripping section 21. In Fig. 4 for example said channel 20 is formed by holes 27, 28 and 29 which pass respectively through the nipple 6, the cup 4 and the body 17 of the seal suction pad, and by the space 30 inside the suction pad itself and bordered by the bellows 18. It can be noted in the drawing also the passage 31 inside the body 2, for communication between connection 8 and aperture 19.

It can be further noted in Fig. 4 that a passage 32 places in communication the two gripping members 3, visible in section, which act in parallel and are intended to grasp a single product, for example a food product or a snack with elongated or stick shape or the like.

Other embodiments of the gripping member 3 are possible within the scope of the invention, said gripping member 3 possibly being formed by a single part or by several components as in the example, according to embodiments of the invention which are to be considered equivalent.

The suction pad 16 creates a constant seal of separation between chamber 9 and air/vacuum aperture 19. In the example an upper edge 24 of the suction pad 16 is in contact with a surface 23 of the body 2, around the aperture 19 which places in communication the connection 8 with the interior 30 of the same suction pad 16 and more generally with the interior of the gripping member 3, i.e. with said channel 20. Consequently the abovementioned chamber 9, i.e. the space inside the sleeve 7, is not in air communication with the connection 8 and the respective air/vacuum aperture 19 and passage 31. Advantageously said surface 23 represents the ceiling of the chamber 9 within which the cup 4 slides.

In the example of the figures, the edge 24 of the internal suction pad 16 is a circular edge of the bellows part 18.

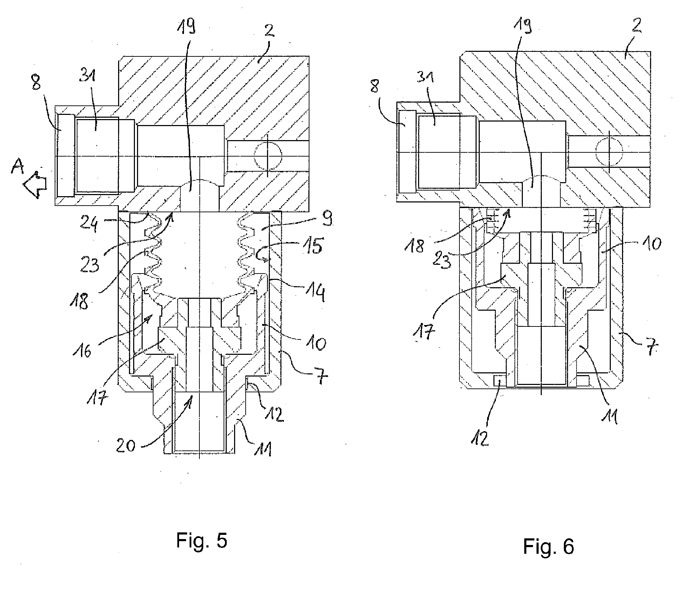

The action of the internal suction pad 16 is shown by the comparison between Figs. 5 and 6. Fig. 6 shows a section of a gripping member 3 in stroke end position with product gripped, similarly to the member 3_{A} of Fig. 3. The rise of the gripping member 3, which is consequent to closure of the open end 21 due to the presence of the product, causes elastic compression of the internal suction pad 16, and particularly of the bellows portion 18. When the head has to leave the product, the vacuum supply (i.e. the aspiration of air by the connection 8) is interrupted, and the gripping member 3 returns into the rest position of Fig. 5. For this purpose, the bellows part 18 of the suction pad 16 exerts an elastic return action. Another return means, such as a conventional spring, can nevertheless be provided according to the embodiments of the invention. For example the gripping member 3 may comprise a helical spring coaxial to the suction pad 16 and abutting between the surface 23 and the head 10. The return is preferably assisted by blowing air (rather than vacuum aspiration) in the connection 8, with the further advantage of a cleaning effect.

The contact between the seal edge 24 and the surface 23 is maintained in all conditions of functioning, in particular both in the position of product grip of Fig. 6, and in the no-product rest position of Fig. 5. Advantageously at least one seal member, represented here by the suction pad 16, is at least slightly compressed also in the position of Fig. 5, so as to guarantee hermetic contact between edge 24 and seal surface 23. Consequently the suction pad 16 continues to isolate the chamber 9 from the channel 20; said channel 20 remains in fluid communication with the aperture 8 via the air/vacuum aperture 19 yet is separate from the external chamber 9, eliminating air leaks for example through the hole 12.

In operation the head 1 is connected to a pneumatic system and, more particularly, to a vacuum pump. Each connection 8 is connected to a respective vacuum line, preferably with means in themselves known such as a Venturi tube and advantageously a silencer. In the position of Fig. 5, the aspiration indicated by the arrow A creates a localised vacuum effect in particular at the gripping aperture 21 of the suction pad 5, which allows the gripping member 3 to grasp a product such as for example the product shown in Fig. 3. The presence of the product closes the aperture 21 and, consequently, a vacuum is rapidly created inside the channel 20.

Thanks to said vacuum, the gripping member 3 rises, going into the position of Fig. 6. The internal seal suction pad 16 maintains the channel 20 sealed from the chamber 9. In this way the vacuum in said channel 20 can be maintained without consumption of air which, in absence of the suction pad 16, would be inevitable in order to compensate the seepages between cup 4 and sleeve 7, through the space 14 and the play of the hole 12. It should also be noted that it is not necessary either to have a gasket or another sealing means acting on the wall 15 or to have a precise assembly between the head 10 and the seat in the sleeve 7, to the benefit of the simplicity of construction and costs.

One of the variants of the invention comprises a substantially specular arrangement of the seal suction pad 16 in relation to that of Figs. 1-6. The seal suction pad can be attached, for example screwed, to the body 2, and sealed through contact with a part of the gripping member 3, for example on the head 10 of the cup 4. In another embodiment two seal suction pads can be provided, attached respectively to the body 2 and to the gripping member 3, which create a seal one against the other. These examples are indicative and not exhaustive of the possible variants of the invention.

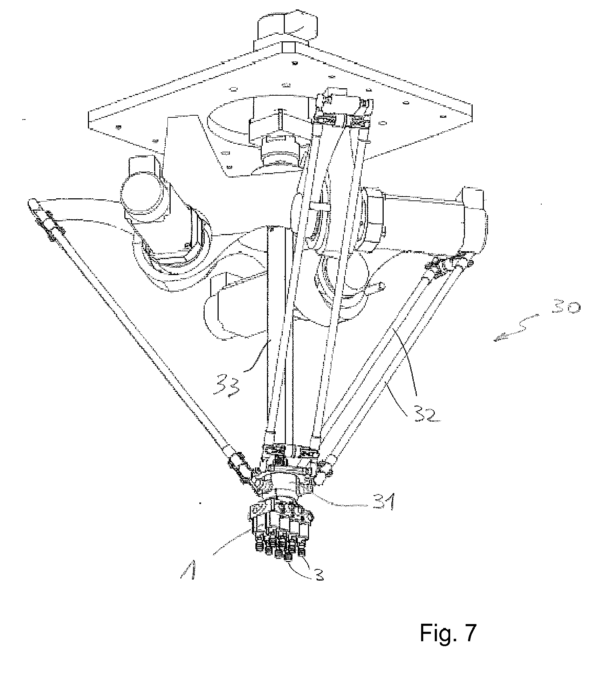

Fig. 7 illustrates a delta robot 30 equipped with the gripping head of Figs. 1-6. The gripping head 1 is associated with the wrist 31 of the robot; said wrist is positioned in space by rods 32 and is rotating around its axis thanks to the central telescopic axis 33 of the robot. The details of the delta robot are known, for example from US-A-4976582, and are not described here. Other types of industrial robot can be equipped advantageously with the gripping head according to the invention. Fig. 1 shows a seat 25 for a metal plate and holes 26 for two screws which can be used for engaging of the head 1 with the wrist 31 of the robot 30. The pneumatic connections, for reasons of simplicity, are not shown in Fig. 7.

The robot 30, or another industrial robot equipped with the gripping head according to the invention, can be used advantageously for operations of product loading in a primary, or secondary, packaging line or machine, i.e. with direct contact with the product or wherein the product is already packed in bags, flowpacks or the like.

## Claims

1. Gripping head (1) for a robot manipulator, comprising:
- a body (2);
- at least one gripping member (3);
- wherein said at least one gripping member comprises a part (10) which is piston-like axially sliding inside a respective chamber (9) of said body, and said gripping member ends with a product gripping section (21);
- wherein said at least one gripping member has at least one respective axial passing-through channel (20), communicating with said product gripping section (21) and with at least one connection (8) for air/vacuum of said body,
the gripping head being **characterised in that**:
- the coupling between said part (10) of gripping member (3) sliding in the chamber and the lateral wall (15) or the lateral walls of said chamber is free and non-airtight, and
- the gripping head comprises at least one seal member (16), located inside said chamber and disposed to realize an airtight seal between said gripping member and an internal surface (23) of said body, so realizing an airtight seal which substantially separates said chamber (9) from said passing-through channel (20) of the gripping member.

2. Gripping head according to claim 1, wherein said seal member (16) comprises at least one elastically deformable portion which acts like an elastic member of return of the gripping member to rest position.

3. Gripping head according to claim 2, said seal member being a suction pad (16) comprising at least one bellows portion (18), elastically deformable in an axial direction.

4. Gripping head according to at least one of the previous claims, wherein said at least one gripping member (3) comprises a cup (4) which is sliding in a respective chamber (9), and the body (2) of the gripping head comprises a sleeve portion (7) which defines said chamber (9).

5. Gripping head according to claim 4, wherein the cup (4) comprises a head part (10) sliding inside the chamber (9) of the sleeve (7), and a stem (11) slidingly passing in a hole (12) of said sleeve.

6. Gripping head according to claim 5, wherein said seal member (16) is associated with the head part (10) of the cup (4).

7. Gripping head according to claim 5, or 6, wherein said stem (11) carries a gripping member (5) directly or via at least one connection nipple (6), said gripping device having an open end section which defines said product gripping section (21).

8. Gripping head according to any one of the previous claims, the head being a multiple-grip head and comprising a plurality of gripping members (3) associated with said body (2), each gripping member of the head being associated with at least one respective seal member (16).

9. A robot manipulator, comprising at least one gripping head (1) according to any one of claims 1 to 8.

10. A robot according to claim 9, said robot being made according to the delta concept.
